# DEMANDE DE BREVET EUROPEEN

(11) **EP 1 757 963 A1**
(43) Date de publication de la demande: **28.02.2007**
(21) Numéro de dépôt: 06300883.3
(22) Date de dépôt: 18.08.2006
(51) Int. Cl.: G02B 6/028, G02B 6/44, B29D 11/00

(54) **Fibre optique perfluoree a gradient d'indice et procedes de fabrication d'une telle fibre**

(30) Priorité: 24.08.2005 FR 0552557
(71) Demandeur: Nexans, 75008 Paris (FR)
(72) Inventeur: Schuepbach, Olivier, 69540, IRIGNY (FR); Goudeau, Jacques, 69540, IRIGNY (FR); Francois, Sandrine, 69006, LYON (FR)
(74) Mandataire: Feray, Valérie

(57) **Abrégé**

La présente invention concerne une fibre optique plastique perfluorée à gradient d'indice 51, comportant un coeur 52 de polymère fluoré dopé avec un composé fluoré, une gaine optique 53 en polymère fluoré d'indice inférieur à celui dudit coeur 52, entourant ledit coeur 52, ainsi qu'une couche de renforcement 54 en matériau polymère, entourant ladite gaine optique 53.

L'invention est remarquable en ce que la fibre optique 51 comporte en outre une couche de protection 55 en résine photo-réticulable entourant ladite couche de renforcement 54, et le matériau polymère de la couche de renforcement 54 est un matériau différent de celui de la couche de protection 55.

## Description

La présente invention concerne une fibre optique plastique à gradient d'indice, dont le coeur et la gaine optique sont réalisés en matériaux polymères fluorés.

L'invention est également relative à un procédé de fabrication d'une telle fibre optique plastique.

L'invention trouve une application particulièrement avantageuse, mais non exclusive, dans le domaine des télécommunications par voie optique.

Une fibre optique plastique perfluorée à gradient d'indice peut voir ses propriétés optiques modifiées si une température excessive et/ou des contraintes mécaniques trop importantes lui sont appliquées au cours de sa fabrication et/ou de sa mise en place et/ou de son utilisation normale.

Pour remédier à cette difficulté, on a pensé à intégrer ce type de fibre optique plastique à l'intérieur d'un corps creux en matériau polymère, formant à la fois renfort structurel et isolant thermique.

Une telle solution présente toutefois l'inconvénient d'être particulièrement onéreuse, en raison aussi bien du prix de revient de l'important supplément de matière nécessaire, que du surcoût de fabrication lié à complexité structurelle de l'ensemble, qui impose notamment la réalisation d'un outillage spécifique.

Aussi le problème technique à résoudre, par l'objet de la présente invention, est de proposer une fibre optique plastique perfluorée à gradient d'indice, comportant un coeur de polymère fluoré dopé avec un composé fluoré, une gaine optique en polymère fluoré d'indice inférieur à celui dudit coeur, entourant ledit coeur, ainsi qu'une couche de renforcement en matériau polymère, entourant ladite gaine optique, fibre optique plastique qui permettrait d'éviter les problèmes de l'état de la technique en offrant notamment une tenue à la température et une résistance aux contraintes mécaniques sensiblement améliorées, tout en présentant un surcoût limité par rapport à une fibre standard.

La solution au problème technique posé consiste selon la présente invention, en ce que la fibre optique comporte en outre une couche de protection en résine photo-réticulable entourant ladite couche de renforcement, et le matériau polymère de la couche de renforcement est un matériau différent de celui de la couche de protection.

L'invention telle qu'ainsi définie présente l'avantage de pouvoir disposer d'une fibre optique plastique perfluorée bénéficiant intrinsèquement d'une protection efficace contre les excès de chaleur et les forces de déformation trop intenses qui peuvent survenir en cours de fabrication et/ou d'installation et/ou d'utilisation. Une simple couche externe en polymère photo-réticulable est en effet en mesure d'améliorer significativement la résistance thermique et la tenue mécanique de la fibre, sans avoir recours à un coûteux renfort isolant structurellement indépendant comme dans l'état de la technique.

L'application d'un revêtement en résine photo-réticulable à l'extérieur d'une fibre optique plastique perfluorée à gradient d'indice, permet également d'améliorer sensiblement les propriétés optiques de ladite fibre. Cette bonification se traduit avant tout par un élargissement systématique de la bande passante, mais aussi par une réduction plus ou moins importante de l'atténuation optique.

Ce résultat s'avère plutôt inattendu puisqu'il n'est pas observé dans le domaine distinct des fibres optiques en silice. Dans le cas présent, il s'explique à priori par le fait que durant son processus d'enrobage par la couche de protection, la fibre optique plastique perfluorée subit un léger traitement thermique qui favorise le relâchement des tensions internes générées préalablement au cours de son étirage à chaud. Logiquement, c'est cette relaxation des contraintes internes qui entraîne l'amélioration observée des performances optiques.

Il est à noter que contrairement aux fibres optiques en silice, la couche de résine photo-réticulable ne joue pas ici simplement un rôle de protection mécanique, mais principalement celui d'une protection thermique.

Cette caractéristique offre avantageusement la possibilité de déposer une couche supplémentaire de matériau polymères, directement sur une fibre optique plastique perfluorée conforme à l'invention, en utilisant un procédé conventionnel d'enrobage à haute température tel qu'une extrusion par exemple. L'écran thermique que forme la couche de protection permet en effet d'éviter des températures excessives, qui en temps normal pourraient altérer les propriétés optiques de la fibre optique plastique perfluorée, et plus particulièrement son atténuation.

La présence d'une couche de protection externe à la surface d'une fibre optique plastique perfluorée, constitue également un avantage en terme de différenciation puisqu'une résine photo-réticulable constitue une matière extrêmement facile à colorer.

Selon une particularité de l'invention, la résine photo-réticulable de la couche de protection est un uréthane acrylate.

De manière particulièrement avantageuse, la résine photo-réticulable de la couche de protection peut comporter au moins un composé retardateur de flammes non halogéné.

Conformément à une autre caractéristique avantageuse, l'épaisseur de la couche de protection est comprise entre 0.1 et 2 millimètres.

Selon une autre particularité de l'invention, le matériau polymère de la couche de renforcement est choisi parmi du polyméthylméthacrylate (PMMA), et des mélanges de polycarbonate et de polyesters.

Selon une autre caractéristique particulièrement avantageuse, le polymère fluoré du coeur et de la gaine optique est du cytop.

### Premier procédé de fabrication

L'invention concerne également un premier procédé de fabrication d'une fibre optique plastique perfluorée à gradient d'indice telle que précédemment décrite.

Ce premier procédé de fabrication est remarquable en ce qu'il comporte les étapes consistant à:
- enduire avec une résine photo-réticulable destinée à constituer une couche de protection, une fibre optique plastique perfluorée standard comportant un coeur de polymère fluoré dopé avec un composé fluoré une gaine optique en polymère fluoré d'indice inférieur à celui dudit coeur, ainsi qu'une couche de renforcement en matériau polymère,
- réticuler la résine photo-réticulable de la couche de protection par rayonnement ultraviolet.

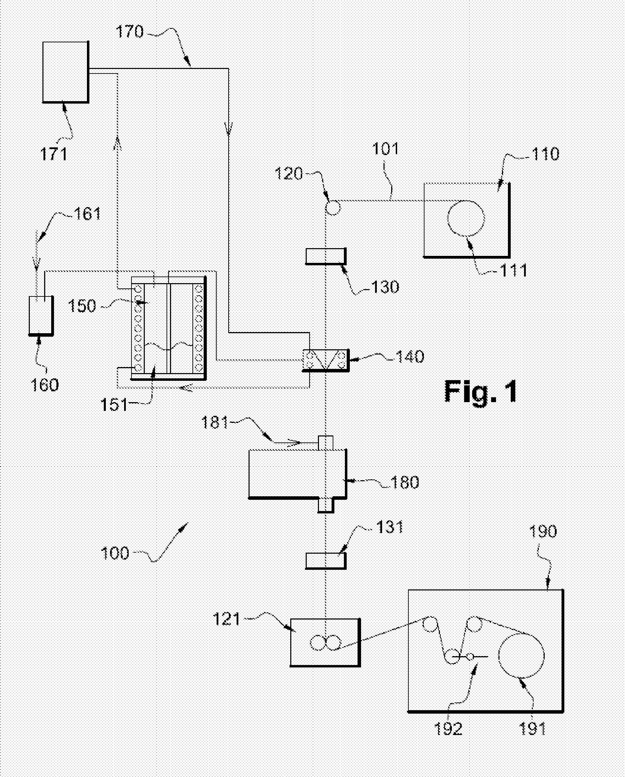

La figure 1 illustre un dispositif 100 permettant de mettre en oeuvre ce premier procédé de fabrication conforme à l'invention.

Le dispositif de fabrication 100 en question utilise à la base une fibre optique plastique perfluorée standard 101, en l'occurrence une fibre qui est classiquement composée d'un coeur de cytop dopé, s'étendant à l'intérieur d'une gaine optique en cytop non dopé, le tout étant recouvert d'une couche de renforcement en PMMA.

Dans cet exemple de réalisation, la fibre optique plastique standard 101 est stockée autour d'une bobine 111 qui est elle même placée sur un dérouloir 110.

Une fois déroulée, la fibre standard 101 passe autour d'une poulie de guidage 120 qui est chargée d'assurer son alignement par rapport à une série d'appareils 130, 140, 180, 131 participant à la réalisation proprement dite de l'enrobage.

On trouve tout d'abord un premier instrument de mesure 130 qui enregistre en continu le diamètre de la fibre standard 101 avant qu'elle n'ait subi le traitement d'enrobage.

Une tête d'enduction 140 applique alors autour de la fibre standard 101, un enduit 151 à base de résine photo-réticulable de type uréthane acrylate qui est stocké dans un réservoir 150. On observe que la pression d'enduction est contrôlée par un régulateur de pression 160 qui est alimenté avec de l'azote via un conduit 161. Mais on remarque également que la tête d'enduction 140 est contrôlée au point de vue température, par l'intermédiaire d'un circuit de refroidissement 170 qui fait circuler de l'eau entre un cryothermostat 171 et la tête d'enduction 140, via le réservoir d'enduit 150.

Une lampe à rayonnement ultraviolet 180 réticule ensuite l'enduit précédemment appliqué, sous une atmosphère inerte constituée d'azote en provenance d'un conduit 181.

Juste après, un second instrument de mesure 131 est disposé afin cette fois d'enregistrer en continu le diamètre de la fibre après traitement, c'est-à-dire après enduction et réticulation. En comparant les valeurs relevées avec celles du premier instrument de mesure 130, il est possible de déterminer les variations d'épaisseur de la couche de protection pour en contrôler la qualité.

A la partie basse du dispositif de fabrication 100, la fibre enrobée passe à travers un cabestan 121 qui est chargé d'exercer une traction continue sur ladite fibre durant tout le processus d'enrobage.

La fibre enrobée est finalement enroulée autour d'une bobine de réception 191 qui est montée sur un enrouleur 190. Un bras flottant 192 permet de contrôler la vitesse d'enroulement qui varie typiquement entre 30 et 500 m/min.

### Second procédé de fabrication

L'invention est par ailleurs relative à un second procédé de fabrication d'une fibre optique plastique perfluorée à gradient d'indice telle que précédemment décrite.

Ce second procédé de fabrication ici caractérisé par le fait qu'il comporte les étapes consistant à:
- étirer à chaud une préforme de fibre optique plastique perfluorée standard comportant une partie interne qui est composée d'un polymère fluoré dopé avec un composé fluoré et qui est destinée à constituer le coeur, une partie intermédiaire qui est composée d'un polymère fluoré et qui est destinée à constituer la gaine optique d'indice inférieur à celui dudit coeur, ainsi qu'une partie externe qui est composée de matériau polymère et qui est destinée à constituer la couche de renforcement,
- enduire la fibre primaire précédemment étirée avec une résine photo-réticulable destinée à constituer la couche de protection,
- réticuler la résine photo-réticulable de la couche de protection par rayonnement ultraviolet.

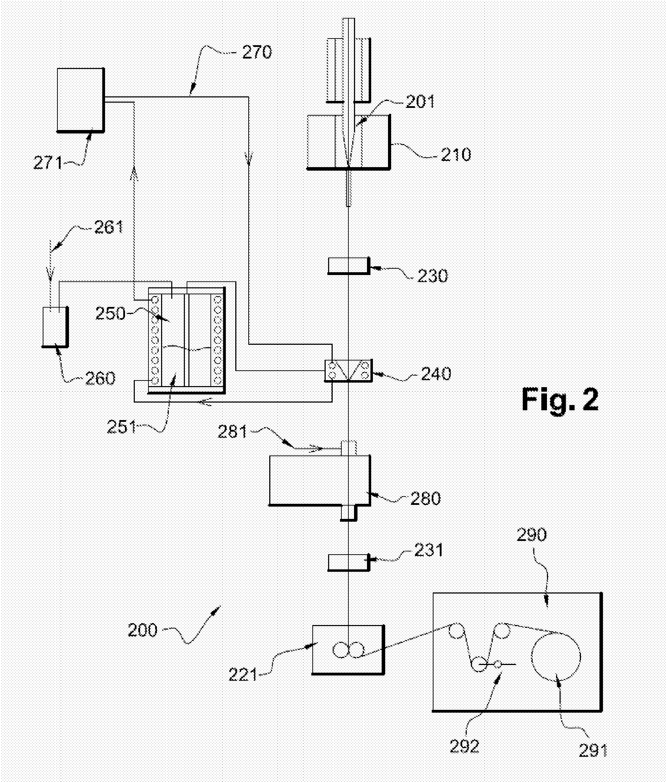

La figure 2 représente quant à elle un dispositif 200 permettant de mettre en oeuvre ce second procédé de fabrication conforme à l'invention.

Le dispositif de fabrication 200 en question utilise à la base une préforme tubulaire standard 201 de fibre optique plastique perfluorée à gradient d'indice. Dans cet exemple de réalisation, cette préforme 201 est constituée en partie interne de cytop dopé destiné à former le coeur, en partie intermédiaire de cytop non dopé destiné à réalisation de la gaine optique, et en partie externe de PMMA destiné à composer la couche de renforcement.

Ainsi qu'on peut le voir à la figure 2, la préforme standard 201 est introduite dans un four d'étirage 210. La chaleur transmise fait fondre l'extrémité de la préforme 201 qui s'étire alors sous la forme d'une fibre primaire.

Une fois étirée, la fibre primaire est dirigée à travers une série d'appareils 230, 240, 280, 231 participant à la réalisation proprement dite de l'enrobage.

On trouve tout d'abord un premier instrument de mesure 230 qui enregistre en continu le diamètre de la fibre primaire avant qu'elle n'ait subi le traitement d'enrobage.

Une tête d'enduction 240 applique alors autour de la fibre primaire, un enduit 251 à base résine photo-réticulable de type uréthane acrylate qui est stocké dans un réservoir 250. On observe que comme dans le cas précédent, la pression d'enduction est contrôlée par un régulateur de pression 260 qui est alimenté avec de l'azote via un conduit 261. Mais on remarque de la même manière que la tête d'enduction 240 est également contrôlée thermiquement, par l'intermédiaire d'un circuit de refroidissement 270 qui fait circuler de l'eau entre un cryothermostat 271 et la tête d'enduction 240, via le réservoir d'enduit 250.

Une lampe à rayonnement ultraviolet 280 réticule ensuite l'enduit qui vient d'être appliqué, dans une atmosphère inerte qui est constituée d'azote acheminée par un conduit 281.

Juste après, un second instrument de mesure 231 est disposé afin d'enregistrer en continu le diamètre de la fibre précédemment revêtue. En comparant les valeurs relevées avec celles du premier instrument de mesure 230, on détermine là aussi les variations d'épaisseur de la couche de protection dans le but d'en vérifier la qualité.

A la partie basse du dispositif de fabrication 200, la fibre enrobée passe à travers un cabestan 221 qui est chargé d'exercer une traction continue sur ladite fibre durant tout le processus d'enrobage.

La fibre enrobée est finalement enroulée autour d'une bobine de réception 291 qui est montée sur un enrouleur 290. Un bras flottant 292 permet de contrôler la vitesse d'enroulement qui varie typiquement entre 20 et 100 m/min.

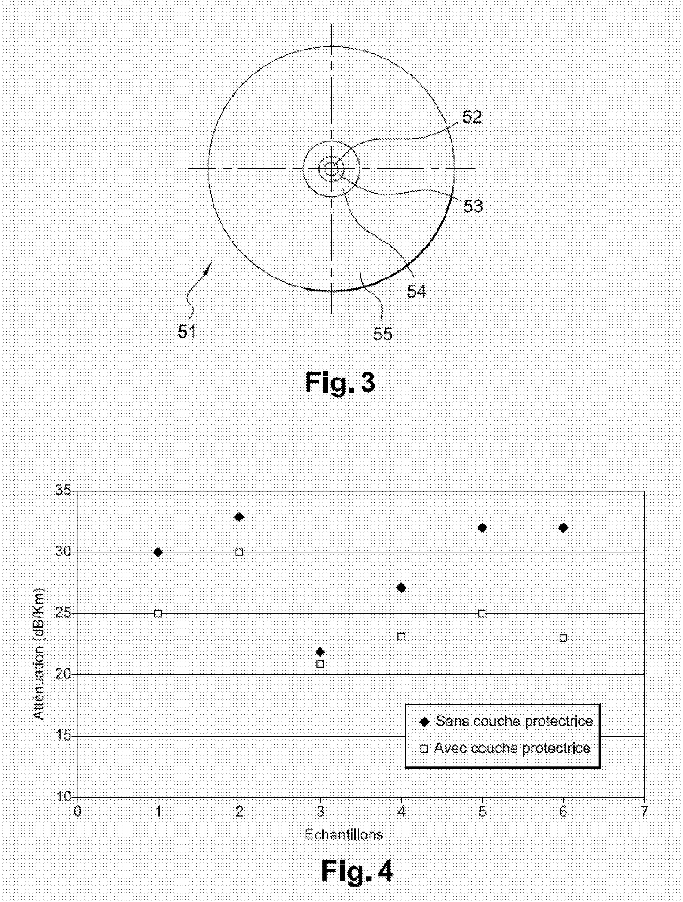

La figure 3 est une coupe transversale qui illustre un exemple typique de fibre optique plastique perfluorée 51 conforme à l'invention.

La couche de renforcement de cette fibre 51 est réalisée en PMMA, et le diamètre externe de la couche de protection 55 atteint 2200µm.

Ainsi qu'on peut le voir sur la figure 3, dans chaque type de fibre 51, les différentes couches 52, 53, 54, 55 sont ménagées de manière parfaitement concentrique.

D'autres caractéristiques et avantages de la présente invention apparaîtront au cours de la description des exemples qui va suivre, ces derniers étant donnés à titre illustratif et nullement limitatif.

L'objectif de ces exemples est d'effectuer une comparaison entre les propriétés d'une fibre optique plastique perfluorée conforme à l'invention, et celles d'une fibre optique plastique perfluorée de référence dont elle est issue.

On utilise donc comme élément de référence, une même fibre optique plastique perfluorée de type standard. En l'occurrence, il s'agit d'une fibre qui est classiquement composée d'un coeur de cytop dopé, s'étendant à l'intérieur d'une gaine optique en cytop non dopé, le tout étant recouvert d'une couche de renforcement en PMMA.

A partir de cette fibre de référence, on prépare une fibre enrobée conforme à l'invention, en mettant en oeuvre par exemple le premier procédé de fabrication précédemment décrit. Les paramètres retenus sont une vitesse de traitement comprise entre 25 et 35 m/min, et une puissance de lampe à rayonnement ultraviolet de 3 à 15 W/cm. La résine photo-réticulable choisie pour constituer la couche de protection est un uréthane acrylate.

### Atténuation optique

Une première série de mesures d'atténuation est réalisée à l'aide d'un réflectomètre sur six échantillons consécutifs de fibre standard, c'est-à-dire six échantillons dépourvus de couche de protection. Une seconde série de mesures est ensuite conduite sur six échantillons consécutifs de fibre enrobée. Il est à noter que chaque échantillon présente une longueur de 300 m.

La figure 4 illustre les différents résultats de ces mesures. On observe clairement une amélioration de l'atténuation moyenne de l'ordre de 4.8 dB/Km, ce qui correspond sensiblement à une baisse d'environ 15%.

### Bande passante

On procède ensuite à des mesures de bandes passantes sur les deux types de fibres perfluorées. Le tableau 1 rassemble les valeurs moyennes des mesures réalisées.

**Tableau 1**

| Echantillon | sans couche de protection | avec couche de protection |
|---|---|---|
| Ouverture numérique | 0.17 | 0.16 |
| bande passante (MHz.Km) | 596 | 1070 |
| ∅ coeur (µm) | 124 | 125 |
| ∅ gaine optique (µm) | 230 | 224 |
| ∅ couche de renforcement (µm) | 486 | 483 |

On remarque ici un fort accroissement de la bande passante, dès lors que la fibre est pourvue d'une couche de protection conforme à l'invention. Il est à noter par ailleurs que cet effet est plus marqué que pour l'atténuation optique, mais surtout il est parfaitement reproductible.

### Résistance thermique

Des tests de cyclage sont mis en oeuvre conformément à la norme IEC 60793-1-52, afin d'évaluer l'impact d'une couche de protection sur la résistance thermique d'une fibre optique plastique perfluorée. Pour chaque type de fibre, les essais sont menés sur trois échantillons et seules les valeurs moyennes sont retenues.

C'est ainsi qu'après dix cycles de température conduits entre -20°C et +70°C, on constate que la fibre enrobée présente une atténuation additionnelle significativement plus basse que celle de la fibre standard. En effet, la valeur moyenne de l'atténuation additionnelle est de +4.7 dB/Km dans le cas de la fibre enrobée, alors qu'elle atteint +15.7 dB/Km pour la fibre de référence.

Ainsi donc, une fibre optique plastique perfluorée conforme à l'invention offre une moins grande sensibilité aux variations de température que la fibre de référence. Cela signifie en d'autres termes que la couche de protection est en quelque sorte à même de jouer un rôle d'écran thermique susceptible de protéger la fibre d'éventuels excès de chaleur.

### Tenue à la température et à l'humidité

On procède ensuite à des tests de vieillissement à 65°C, 95% d'humidité relative, et une durée de traitement de 19 jours. Le but est ici d'évaluer et de comparer les tenues à la température et à l'humidité, de la fibre de référence d'une part, et de la fibre enrobée conforme à l'invention d'autre part.

Concrètement, à l'aide d'un réflectomètre, on réalise une mesure d'atténuation optique avant vieillissement pour chaque type de fibre, puis une série de mesures à intervalle de temps réguliers au cours du vieillissement. Le tableau 2 rassemble les valeurs moyennes calculées à partir des différentes mesures.

**Tableau 2**

| Echantillon | avec couche de protection | sans couche de protection |
|---|---|---|
| Atténuation avant vieillissement (dB/Km) | 27.3 | 27.6 |
| Atténuation après vieillissement (dB/Km) | 39.8 | 65.6 |
| Ecart d'atténuation (dB/Km) | 12.5 | 38.0 |

On voit clairement que le vieillissement génère une dégradation de l'atténuation de 12.4 dB/Km pour la fibre enrobée, alors qu'elle est de 38 dB/Km pour la fibre standard. L'amélioration de la tenue en température et humidité est donc très nette dès lors que la fibre optique plastique perfluorée est pourvue d'un revêtement externe en résine photo-réticulable.

## Revendications

1. Fibre optique plastique perfluorée à gradient d'indice (51), comportant :
- un coeur (52) de polymère fluoré dopé avec un composé fluoré,
- une gaine optique (53) en polymère fluoré d'indice inférieur à celui dudit coeur (52), entourant ledit coeur (52),
- ainsi qu'une couche de renforcement (54) en matériau polymère, entourant ladite gaine optique (53),
**caractérisé en ce que** :
- la fibre optique (51) comporte en outre une couche de protection (55) en résine photo-réticulable entourant ladite couche de renforcement (54), et
- le matériau polymère de la couche de renforcement (54) est un matériau différent de celui de la couche de protection (55).

2. Fibre optique plastique (51) selon la revendication 1, **caractérisé en ce que** la résine photo-réticulable de la couche de protection (55) est un uréthane acrylate.

3. Fibre optique plastique (51) selon l'une des revendications 1 ou 2, **caractérisé en ce que** la résine photo-réticulable de la couche de protection (55) comporte au moins un composé retardateur de flammes non halogéné.

4. Fibre optique plastique (51) selon l'une quelconque des revendications 1 à 3, **caractérisé en ce que** l'épaisseur de la couche de protection (55) est comprise entre 0.1 et 2 millimètres.

5. Fibre optique plastique (1, 51) selon l'une quelconque des revendications 1 à 4, **caractérisé en ce que** le matériau polymère de la couche de renforcement (4, 54) est choisi parmi le groupe du polyméthylméthacrylate (PMMA), et des mélanges de polycarbonate et de polyester.

6. Fibre optique plastique (51) selon l'une quelconque des revendications 1 à 5, **caractérisé en ce que** le polymère fluoré du coeur (52) et de la gaine optique (53) est du cytop.

7. Procédé de fabrication d'une fibre optique plastique perfluorée à gradient d'indice (51) selon l'une quelconque des revendications précédentes, **caractérisé en ce qu'**il comporte les étapes consistant à:
- enduire avec une résine photo-réticulable destinée à constituer une couche de protection (55), une fibre optique plastique perfluorée standard comportant un coeur (52) de polymère fluoré dopé avec un composé fluoré d'indice supérieur, une gaine optique (53) en polymère fluoré, ainsi qu'une couche de renforcement (54) en matériau polymère,
- réticuler la résine photo-réticulable de la couche de protection (55) par rayonnement ultraviolet.

8. Procédé de fabrication d'une fibre optique plastique perfluorée à gradient d'indice (51) selon l'une quelconque des revendications 1 à 6, **caractérisé en ce qu'**il comporte les étapes consistant à:
- étirer à chaud une préforme de fibre optique plastique perfluorée standard comportant une partie interne qui est composée d'un polymère fluoré dopé avec un composé fluoré d'indice supérieur et qui est destinée à constituer le coeur (52), une partie intermédiaire qui est composée d'un polymère fluoré et qui est destinée à constituer la gaine optique (53), ainsi qu'une partie externe qui est composée d'un matériau polymère et qui est destinée à constituer la couche de renforcement (54),
- enduire la fibre classique précédemment étirée avec une résine photo-réticulable destinée à constituer la couche de protection (55),
- réticuler la résine photo-réticulable de la couche de protection (55) par rayonnement ultraviolet.
